# EUROPEAN PATENT APPLICATION

(11) **EP 4 790 768 A1**
(43) Date of publication of application: **12.08.2026**
(21) Application number: 24875925.0
(22) Date of filing: 11.03.2024
(51) Int. Cl.: H01M 4/58, H01M 4/136, H01M 10/054, C01B 25/455, C01B 33/26, C01B 25/45

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(30) Priority: 09.10.2023 CN 202311299403
(71) Applicant: Contemporary Amperex Technology Co., Limited, Ningde, Fujian 352100 (CN)
(72) Inventor: ZHAO, Yuzhen, Ningde, Fujian 352100 (CN); WEN, Yan, Ningde, Fujian 352100 (CN); HUANG, Qisen, Ningde, Fujian 352100 (CN); GUAN, Yingjie, Ningde, Fujian 352100 (CN); QIN, Meng, Ningde, Fujian 352100 (CN); LIN, De, Ningde, Fujian 352100 (CN); LIU, Yongyou, Ningde, Fujian 352100 (CN)
(74) Representative: Gong, Jinping
(86) International application number: PCT/CN2024/080952
(87) International publication number: WO 2025/077096

(57) **Abstract**

Provided are a positive electrode active material and a preparation method therefor, a positive electrode sheet, a battery, and an electric device. The positive electrode active material comprises Na₄₋ₐA_{b}Fe_{3-c}B_{d}(PO₄)₂₋ₑDf(P2O7), wherein A comprises at least one of Li and K, B comprises a metal element, D comprises at least one of a halogen anion, a silicate ion, a sulfate ion, or a borate ion, -0.12≤a≤0.12, b≥0, 0≤c≤ 0.3, d≥0, f>0 and 0<e≤0.1.

## Description

### TECHNICAL FIELD

The present application relates to the field of batteries, and in particular, to a positive electrode active material and a preparation method therefor, a positive electrode plate, a battery, and an electric device.

### BACKGROUND

Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. The sodium-ion battery is a type of battery. The positive electrode active material Na₄Fe₃(PO₄)₂P₂O₇ in sodium-ion batteries features abundant resources and environmental friendliness and is easy to produce on a large scale, so it is one of the popular positive electrode active materials for sodium-ion batteries. However, the intrinsic conductivity of this material is poor, which affects its specific capacity and reduces the energy density and rate capability of the battery.

### SUMMARY

In view of the technical problems mentioned in the background section, the present application provides a positive electrode active material capable of increasing the specific capacity of the positive electrode active material and improving the energy density and rate capability of a battery.

A first aspect of the present application provides a positive electrode active material including Na₄₋ₐA_{b}Fe_{3-c}B_{d}(PO₄)₂₋ₑD_{f}(P₂O₇), where A includes at least one of Li or K, B includes a metal element, D includes at least one of a halogen anion, a silicate ion, a sulfate ion, or a borate ion, -0.12 ≤ a ≤ 0.12, b ≥ 0, 0 ≤ c ≤ 0.3, d ≥ 0, f > 0 and 0 < e ≤ 0.1.

According to the positive electrode active material proposed in the present application, when the positive electrode active material is doped with only the anion D, the anion can replace part of the phosphate ions, thereby adjusting the local chemical bonds and electron distribution of the positive electrode active material, improving the intrinsic conductivity of the positive electrode active material, increasing the specific capacity of the positive electrode active material, and improving the energy density and rate capability of the battery. When the positive electrode active material is doped with both the anion D and at least one of the cations A and B, the synergy of the anion and cation can improve the purity of the positive electrode active material, enhance the structural stability of the positive electrode active material, improve the ionic conductivity and electronic conductivity of the positive electrode active material, improve the phase purity, increase the specific capacity of the positive electrode active material, and improve the energy density and rate capability of the battery.

According to some embodiments of the present application, 1 ≤ f/e ≤ 3. As a result, the intrinsic conductivity of the positive electrode active material is improved, the specific capacity of the material is increased, and the energy density and rate capability of the battery are improved.

According to some embodiments of the present application, 0 < f ≤ 0.3. As a result, the intrinsic conductivity of the positive electrode active material is improved, and the specific capacity of the positive electrode active material is increased.

According to some embodiments of the present application, 0 < f ≤ 0.15. As a result, the intrinsic conductivity of the positive electrode active material is improved, and the specific capacity of the positive electrode active material is increased.

According to some embodiments of the present application, 0 < e ≤ 0.05. As a result, the intrinsic conductivity of the positive electrode active material is improved, and the specific capacity of the positive electrode active material is increased.

According to some embodiments of the present application, 3.88 ≤ 4 - a + b ≤ 4.12. As a result, the stability of the positive electrode active material is improved.

According to some embodiments of the present application, 2.7 ≤ 3 - c + d ≤ 3. The phase purity of the positive electrode active material can be improved, thereby increasing the specific capacity of the material and improving the energy density of the battery.

According to some embodiments of the present application, B includes at least one of Al, Mg, Ca, Ni, Co, Mn, Cu, Zn, Cr, V, Ti, Sr, Y, Mo, Nb, or W.

According to some embodiments of the present application, D includes at least one of the halogen anion, the silicate ion, or the borate ion.

According to some embodiments of the present application, the halogen anion includes F⁻ or Cl⁻.

As a result, by doping the positive electrode active material with the above-mentioned types of anions and cations, the ionic conductivity and electronic conductivity of the positive electrode active material are improved, the purity of the positive electrode active material is improved, the specific capacity of the material is increased, and the energy density and rate capability of the battery are improved.

According to some embodiments of the present application, D includes any two of the halogen anion, the silicate ion, the sulfate ion, or the borate ion, and 1 ≤ f/e ≤ 3. As a result, the intrinsic conductivity of the positive electrode active material is improved, the specific capacity of the material is increased, and the energy density and rate capability of the battery are improved.

According to some embodiments of the present application, 0 ≤ b ≤ 0.1.

According to some embodiments of the present application, 0.05 ≤ c ≤ 0.2.

According to some embodiments of the present application, 0 ≤ d ≤ 0.3, and c ≥ d.

As a result, by allowing the values of b, c, and d to be within the above ranges, the ionic conductivity and electronic conductivity of the positive electrode active material are improved, the purity of the positive electrode active material is improved, the specific capacity of the material is increased, and the energy density and rate capability of the battery are improved.

According to some embodiments of the present application, the positive electrode active material further includes carbon. As a result, the phase purity and conductivity of the positive electrode active material can be enhanced, and the energy density and rate capability of the battery can be improved.

According to some embodiments of the present application, the mass proportion of the carbon is 0.5%-4% based on the total mass of the positive electrode active material. As a result, the phase purity and conductivity of the positive electrode active material can be enhanced, and the energy density and rate capability of the battery can be improved.

According to some embodiments of the present application, the mass proportion of the carbon is 1%-3% based on the total mass of the positive electrode active material. As a result, the phase purity and conductivity of the positive electrode active material can be enhanced, and the energy density and rate capability of the battery can be improved.

According to some embodiments of the present application, the volume-based average particle size Dᵥ50 of the positive electrode active material is 0.7 µm to 7 µm.

According to some embodiments of the present application, the volume-based average particle size Dᵥ50 of the positive electrode active material is 1.2 µm to 4 µm.

According to some embodiments of the present application, the BET specific surface area of the positive electrode active material is 4 m²/g to 12 m²/g.

According to some embodiments of the present application, the BET specific surface area of the positive electrode active material is 5.5 m²/g to 10 m²/g.

As a result, by allowing the volume-based average particle size and the BET specific surface area of the positive electrode active material to be within the above ranges, the contact area between the positive electrode active material particles and other particles can be improved, the electron conductivity of the positive electrode plate can be enhanced, and the transport path of sodium ions can be shortened, and the rate capability of the material can be improved.

A second aspect of the present application provides a method for preparing a positive electrode active material, which includes mixing a sodium source, an iron source, a phosphorus source, and a D source to obtain a precursor material; and sintering the precursor material to obtain the positive electrode active material. As a result, the prepared positive electrode active material has a high specific capacity, and the energy density and rate capability of the battery containing the positive electrode active material can be improved.

According to some embodiments of the present application, the method further includes adding an A source and/or a B source to the precursor material. As a result, the synergy of anions and cations can improve the purity of the positive electrode active material, enhance the structural stability of the positive electrode active material, improve the ionic conductivity and electronic conductivity of the positive electrode active material, increase the specific capacity of the positive electrode active material, and improve the energy density and rate capability of the battery.

According to some embodiments of the present application, the method further includes adding a first carbon source to the precursor material. As a result, the phase purity and conductivity of the positive electrode active material can be enhanced, and the energy density and rate capability of the battery can be improved.

According to some embodiments of the present application, the method further includes mixing the positive electrode active material with a second carbon source and sintering to form a carbon coating layer on the surface of the positive electrode active material. As a result, the conductivity of the positive electrode active material can be enhanced, and the energy density and rate capability of the battery can be improved.

According to some embodiments of the present application, the sintering includes a first sintering and a second sintering, and the first sintering is performed at a temperature of 200 °C to 400 °C with a holding time of 3 h to 5 h.

According to some embodiments of the present application, the sintering includes a first sintering and a second sintering, and the second sintering is performed at a temperature of 450 °C to 650 °C with a holding time of 8 h to 15 h.

As a result, by allowing the temperature and holding time of the first sintering and the second sintering to be within the above ranges, the materials are sufficiently reacted, and the phase purity and crystallinity of the positive electrode active material are improved.

A third aspect of the present application provides a positive electrode plate including the positive electrode active material provided in the first aspect of the present application or a positive electrode active material prepared by the method provided in the second aspect of the present application. As a result, the energy density and rate capability of the battery including the positive electrode plate are improved.

A fourth aspect of the present application provides a battery including the positive electrode plate provided in the third aspect of the present application. As a result, the battery has excellent energy density and rate capability.

A fifth aspect of the present application provides an electric device including the battery provided in the fourth aspect of the present application. As a result, the service life of the electric device is improved.

The additional aspects and the advantages of the present application will be partially provided in the following description, will partially become apparent from the following description, or will be learned through the practice of the present application.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural view of a battery according to one embodiment of the present application;
FIG. 2 is a schematic structural view of a battery module according to one embodiment of the present application;
FIG. 3 is a schematic structural view of a battery pack according to one embodiment of the present application;
FIG. 4 is an exploded view of FIG. 3; and
FIG. 5 is a schematic view of one embodiment of an electric device in which a battery is used as a power source.

Description of the reference numerals:
1: secondary battery; 2: battery module; 3: battery pack; 4: upper case body; 5: lower case body.

### DETAILED DESCRIPTION

Embodiments of the technical solutions of the present application are described in detail below. The following embodiments are only used to more clearly illustrate the technical solutions of the present application, and therefore, are only exemplary and do not limit the protection scope of the present application.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

With the technological development and increasing demand of electric cars and rechargeable mobile devices, batteries, as a representative of the new energy sector, have witnessed rapid development in research related thereto. Compared with traditional lithium-ion batteries, sodium-ion batteries have a strong price advantage and show wide application prospects in large-scale power storage systems.

Iron-based polyanionic phosphate positive electrode material Na₄Fe₃(PO₄)₂P₂O₇ has become one of the popular positive electrode active materials for sodium-ion batteries because of its abundant resources, environmental friendliness, easy large-scale production, open sodium ion diffusion channels, and good thermal stability and cycling stability. However, the intrinsic conductivity of this material is poor, which affects its specific capacity and reduces the energy density and rate capability of the battery.

According to the positive electrode active material proposed in the present application, the positive electrode active material may be doped with anions or both anions and cations. When the material is doped with only anions, anions can replace part of the phosphate ions, thereby adjusting the local chemical bonds and electron distribution of the positive electrode active material, improving the intrinsic conductivity of the positive electrode active material, increasing the specific capacity of the positive electrode active material, and improving the energy density and rate capability of the battery. When the positive electrode active material is doped with both anions and cations, the synergy of anions and cations can improve the purity of the positive electrode active material, enhance the structural stability of the positive electrode active material, improve the ionic conductivity and electronic conductivity of the positive electrode active material, increase the specific capacity of the positive electrode active material, and improve the energy density and rate capability of the battery.

The positive electrode active material disclosed in the embodiments of the present application is applicable to a sodium-ion battery, and the battery disclosed in the embodiments of the present application may be used in an electric device using a battery as a power source or various energy storage systems using a battery as an energy storage element. The electric device may include, but is not limited to, a mobile phone, a tablet, a laptop computer, an electric toy, an electric tool, an electric bicycle, an electric car, a ship, a spacecraft, and the like. The electric toy may include stationary or mobile electric toys, such as game consoles, electric car toys, electric ship toys, or electric airplane toys. The spacecraft may include airplanes, rockets, space shuttles, spaceships, and the like.

A first aspect of the present application provides a positive electrode active material including Na₄₋ₐA_{b}Fe_{3-c}B_{d}(PO₄)₂₋ₑD_{f}(P₂O₇), where A includes at least one of Li or K, B includes a metal element, D includes at least one of a halogen anion, a silicate ion, a sulfate ion, or a borate ion, -0.12 ≤ a ≤ 0.12, b ≥ 0, 0 ≤ c ≤ 0.3, d ≥ 0, f > 0 and 0 < e ≤ 0.1.

According to the positive electrode active material proposed in the present application, when the anion D is contained in the positive electrode active material, D can replace part of the phosphate ions. Since the ionic radius of D is different from that of the phosphate ion, doping with D can adjust the local chemical bond length and electron distribution of the positive electrode active material and adjust the structural band gap of the material, thereby improving the intrinsic conductivity of the positive electrode active material, increasing the specific capacity of the positive electrode active material, and improving the energy density and rate capability of the battery. On this basis, when the positive electrode active material is further doped with cation A at the site Na and when A is a K ion, since the ionic radius of the K ion is larger than the ionic radius of the Na ion, doping with the above-mentioned content of the K ion at the site Na will result in slight deformation of the lattice structure and thereby expand the Na ion transport channel. This facilitates the rapid deintercalation of Na ions and reduces the Na ion migration barrier, thereby increasing the ionic conductivity and improving the rate capability of the battery. When A is a lithium ion, doping with the lithium ion can inhibit the generation of impurity phases such as sodium iron pyrophosphate and sodium iron phosphate and promote the generation of polyanionic phosphate products, thereby improving the phase purity of the positive electrode material, increasing the specific capacity of the material, and improving the energy density of the battery. Doping with the above-mentioned content of metal element B at the site Fe can also inhibit the generation of impurity phases such as sodium iron pyrophosphate and sodium iron phosphate and promote the generation of polyanionic phosphate products, thereby improving the phase purity of the positive electrode material, increasing the specific capacity of the material, and improving the energy density of the battery. In addition, doping with the metal element B at the site Fe will also improve the ionic conductivity and electronic conductivity of the material, reduce the electron transport impedance in the battery, reduce the polarization of the battery, improve the reversibility of sodium ion deintercalation, and thereby improve the rate capability of the battery. Synergistic doping with anions and cations can improve the purity of the positive electrode active material, enhance the structural stability of the positive electrode active material, improve the ionic conductivity and electronic conductivity of the positive electrode active material, improve the phase purity, increase the specific capacity of the positive electrode active material, and improve the energy density and rate capability of the battery. When the positive electrode active material is doped with element A at the site Na, element B at the site Fe, and element D at the anion site at the same time, the three dopants synergistically construct a high-entropy structure compatible with anions and cations. This enhances the sodium storage performance of the material, increases the specific capacity of the positive electrode active material, and improves the energy density and rate capability of the battery.

In the present application, the high-entropy structure refers to a structure having a high entropy value formed by simultaneously doping the material with multiple elements.

It should be noted that the ratio of the elements in the positive electrode active material in the present application refers to the ratio of the elements in the positive electrode active material before the positive electrode active material is made into a positive electrode plate and the positive electrode plate is assembled into a battery for formation. Those skilled in the art can understand that in the positive electrode plate, battery, or electric device, some elements may be consumed due to processes such as formation and cycling, and even if it is measured that the corresponding element ratio of the positive electrode active material is not within the above range, it should also fall within the scope of the present application. For example, batteries in the market are typically subjected to cycling and aging after assembly. Therefore, in the positive electrode active material, the a may be > 0.12, and/or the c may be > 0.3, and/or the atomic ratio of the element P and the element O may be a non-integer ratio.

According to some embodiments of the present application, a in the above compound Na₄₋ₐA_{b}Fe_{3-c}B_{d}(PO₄)₂₋ₑD_{f}(P₂O₇) may be in the range -0.12 ≤ a ≤ 0.12. For example, it may be -0.12, -0.1, -0.08, -0.06, -0.04, -0.02, 0, 0.02, 0.04, 0.06, 0.08, 0.1, 0.12, or the like, or may be a range formed by any of the above values. As a result, the positive electrode active material includes this content of sodium ions, so that the battery has a high capacity.

According to some embodiments of the present application, b in the above compound Na₄₋ₐA_{b}Fe_{3-c}B_{d}(PO₄)₂₋ₑD_{f}(P₂O₇) may be ≥ 0. For example, it may be 0, 0.02, 0.04, 0.06, 0.08, 0.1, 0.12, 0.14, 0.16, 0.18, 0.2, 0.25, 0.3, 0.35, 0.4, or the like, or may be a range formed by any of the above values. Therefore, in the case of doping the positive electrode active material with this content of A ion at the site Na, since the radius of the A ion is larger than that of the Na ion, doping with this content of A ion at the site Na site will result in slight deformation of the lattice structure and thereby expand the Na ion transport channel. This facilitates the rapid deintercalation of Na ions. At the same time, doping with this content of A ion at the site Na can reduce the Na ion migration barrier, thereby improving the ionic conductivity and improving the rate capability of the battery.

According to some embodiments of the present application, a and b in the above compound Na₄₋ₐA_{b}Fe_{3-c}B_{d}(PO₄)₂₋ₑD_{f}(P₂O₇) satisfy 3.88 ≤ 4 - a + b≤ 4.12. For example, it may be 3.88, 3.9, 3.92, 3.94, 3.96, 3.98, 4, 4.02, 4.04, 4.06, 4.08, 4.1, 4.12, or the like, or may be a range formed by any of the above values. As a result, the degree of distortion of the positive electrode material is reduced, and the stability of the positive electrode material is improved.

According to some embodiments of the present application, c in the above compound Na₄₋ₐA_{b}Fe_{3-c}B_{d}(PO₄)₂₋ₑD_{f}(P₂O₇) may be in the range 0 ≤ c ≤ 0.3. For example, it may be 0, 0.05, 0.1, 0.15, 0.2, 0.25, 0.3, or the like, or may be a range formed by any of the above values. As a result, when the positive electrode active material includes this content of element Fe, the thermal stability of the positive electrode active material can be improved. According to some specific embodiments of the present application, 0.05 ≤ c ≤ 0.2.

According to some embodiments of the present application, d in the above compound Na₄₋ₐA_{b}Fe_{3-c}B_{d}(PO₄)₂₋ₑD_{f}(P₂O₇) may be ≥ 0. For example, it may be 0, 0.05, 0.1, 0.15, 0.2, 0.25, 0.3, or the like, or may be a range formed by any of the above values. As a result, doping with this content of metal element B at the site Fe in the above positive electrode active material can inhibit the generation of impurity phases such as sodium iron pyrophosphate and sodium iron phosphate and promote the generation of polyanionic phosphate products, thereby improving the phase purity of the positive electrode active material, increasing the specific capacity of the material, and improving the energy density of the battery. In addition, doping with this content of metal element B at the site Fe will also improve the ionic conductivity and electronic conductivity of the material, reduce the electron transport impedance in the battery, reduce the polarization of the battery, improve the reversibility of sodium ion deintercalation, and thereby improve the rate capability of the battery. According to some specific embodiments of the present application, 0 ≤ d ≤ 0.3.

According to some embodiments of the present application, c and d in the above compound Na₄₋ₐA_{b}Fe_{3-c}B_{d}(PO₄)₂₋ₑD_{f}(P₂O₇) satisfy c ≥ d and 2.7 ≤ 3 - c + d ≤ 3. For example, it may be 2.7, 2.75, 2.8, 2.85, 2.9, 2.95, 3, or the like, or may be a range formed by any of the above values. As a result, the structural stability of the positive electrode active material can be improved.

According to some embodiments of the present application, f and e in the above compound Na₄₋ₐA_{b}Fe_{3-c}B_{d}(PO₄)₂₋ₑD_{f}(P₂O₇) satisfy 1 ≤ f/e ≤ 3. For example, it may be 1, 1.2, 1.4, 1.6, 1.8, 2, 2.2, 2.4, 2.6, 2.8, 3, or the like, or may be a range formed by any of the above values. As a result, the intrinsic conductivity of the positive electrode active material is improved, the specific capacity of the material is increased, and the energy density and rate capability of the battery are improved.

According to some embodiments of the present application, f in the above compound Na₄₋ₐA_{b}Fe_{3-c}B_{d}(PO₄)₂₋ₑD_{f}(P₂O₇) may be in the range 0 < f ≤ 0.3. For example, it may be 0.05, 0.1, 0.15, 0.2, 0.25, 0.3, or the like, or may be a range formed by any of the above values. As a result, the intrinsic conductivity of the positive electrode active material is improved, and the specific capacity of the positive electrode active material is increased. According to some specific embodiments of the present application, 0 < f ≤ 0.15.

According to some embodiments of the present application, e in the above compound Na₄₋ₐA_{b}Fe_{3-c}B_{d}(PO₄)₂₋ₑD_{f}(P₂O₇) may be in the range 0 < e ≤ 0.1. For example, it may be 0.01, 0.02, 0.03, 0.04, 0.05, 0.06, 0.07, 0.08, 0.09, 0.1, or the like, or may be a range formed by any of the above values. As a result, the intrinsic conductivity of the positive electrode active material is improved, and the specific capacity of the positive electrode active material is increased. According to some specific embodiments of the present application, 0 < e ≤ 0.05.

According to some embodiments of the present application, B in the above compound Na₄₋ₐA_{b}Fe_{3-c}B_{d}(PO₄)₂₋ₑD_{f}(P₂O₇) includes at least one of Al, Mg, Ca, Ni, Co, Mn, Cu, Zn, Cr, V, Ti, Sr, Y, Mo, Nb, or W. As a result, the metal element B of this composition can not only reduce the impurity phases in the positive electrode active material, but also improve the conductivity of the positive electrode active material, thereby improving the energy density and rate capability of the battery.

According to some embodiments of the present application, D in the above compound Na₄₋ₐA_{b}Fe_{3-c}B_{d}(PO₄)₂₋ₑD_{f}(P₂O₇) includes at least one of the halogen anion, the silicate ion, or the borate ion. As a result, the above anions can replace part of the phosphate ions. Since the ionic radius of D is different from that of the phosphate ion, doping with D can adjust the local chemical bond length and electron distribution of the positive electrode active material and adjust the structural band gap of the material, thereby improving the intrinsic conductivity of the positive electrode active material, increasing the specific capacity of the positive electrode active material, and improving the energy density and rate capability of the battery. According to some specific embodiments of the present application, the halogen anion includes F⁻ or Cl⁻.

According to some embodiments of the present application, when D in the above compound Na₄₋ₐA_{b}Fe_{3-c}B_{d}(PO₄)₂₋ₑD_{f}(P₂O₇) includes any two of the halogen anion, the silicate ion, the sulfate ion, or the borate ion, 1 ≤ f/e ≤ 3. For example, it may be 1, 1.2, 1.4, 1.6, 1.8, 2, 2.2, 2.4, 2.6, 2.8, 3, or the like, or may be a range formed by any of the above values. As a result, the intrinsic conductivity of the positive electrode active material is improved, the specific capacity of the material is increased, and the energy density and rate capability of the battery are improved.

According to some embodiments of the present application, the positive electrode active material may further include carbon. For example, the carbon may be mixed within the interior of the positive electrode active material and/or applied to at least a part of the surface of the positive electrode active material particles. Specifically, the carbon mixed within the interior of the positive electrode active material can improve the phase purity of the material, reduce the content of impurity phases in the material, increase the specific capacity of the material, and also improve the conductivity of the positive electrode active material. Applying the carbon to the surface of the positive electrode active material, that is, forming a carbon coating layer on the surface of the positive electrode active material particles, can not only improve the conductivity of the material, but also reduce the contact area between the positive electrode active material and the electrolytic solution in the battery, and mitigate the side reaction of the positive electrode active material, facilitating the full utilization of the capacity of the material.

According to some embodiments of the present application, the mass proportion of the carbon is 0.5%-4% based on the total mass of the positive electrode active material. For example, it may be 0.5%, 1%, 1.5%, 2%, 2.5%, 3%, 3.5%, 4%, or the like, or may be a range formed by any of the above values. Specifically, if carbon is mixed within the interior of the positive electrode active material, the carbon content here is the content of carbon mixed within the interior of the positive electrode active material; if carbon is applied to the surface of the positive electrode active material, the carbon content here is the carbon content of the coating layer formed on the surface of the positive electrode active material; if carbon is mixed within the interior of the positive electrode active material and also applied to the surface of the positive electrode active material, the carbon content here is the sum of the content of carbon mixed within the interior of the positive electrode active material and the content of carbon applied to the surface of the positive electrode active material. In the present application, by allowing the carbon content to be within the above proportion range, the conductive performance and specific capacity of the positive electrode active material can be improved. According to some specific embodiments of the present application, the mass proportion of the carbon is 1%-3% based on the total mass of the positive electrode active material.

According to some embodiments of the present application, the volume-based average particle size Dᵥ50 of the positive electrode active material may be 0.7 µm to 7 µm. For example, it may be 0.7 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, or the like, or may be a range formed by any of the above values. As a result, by allowing the volume-based average particle size of the positive electrode active material to be within the above range, the contact area between the positive electrode active material particles and other particles on the positive electrode plate can be improved, the conductivity of the positive electrode plate can be enhanced, the transport path of sodium ions can be shortened, and the rate capability of the positive electrode active material can be improved. By allowing the volume-based average particle size of the positive electrode active material to be within the above range, the specific surface area of the positive electrode active material is reduced, the amount of the electrolytic solution added to the battery is decreased, the side reaction between the positive electrode active material and the electrolytic solution is mitigated, the energy density of the battery is improved, and the probability of deterioration of battery performance is reduced. According to some specific embodiments of the present application, the volume-based average particle size Dᵥ50 of the positive electrode active material may be 1.2 µm to 4 µm.

In the present application, Dᵥ50 refers to the corresponding particle size when the cumulative volume distribution percentage reaches 50%, for example, as determined using a laser particle size analyzer (e.g., Malvern Master Size 3000) with reference to the standard GB/T 19077-2016.

According to some embodiments of the present application, the BET specific surface area of the positive electrode active material is 4 m²/g to 12 m²/g. For example, it may be 4 m²/g, 4.5 m²/g, 5 m²/g, 5.5 m²/g, 6 m²/g, 6.5 m²/g, 7 m²/g, 7.5 m²/g, 8 m²/g, 8.5 m²/g, 9 m²/g, 9.5 m²/g, 10 m²/g, 10.5 m²/g, 11 m²/g, 11.5 m²/g, 12 m²/g, or the like, or may be a range formed by any of the above values. As a result, by allowing the specific surface area of the positive electrode active material to be within the above range, the contact area between the positive electrode active material particles and other particles on the positive electrode plate can be improved, the conductivity of the positive electrode plate can be enhanced, the transport path of sodium ions can be shortened, and the rate capability of the positive electrode active material can be improved. By allowing the specific surface area of the positive electrode active material to be within the above range, the amount of the electrolytic solution added to the battery is decreased, the side reaction between the positive electrode active material and the electrolytic solution is mitigated, the energy density of the battery is improved, and the probability of deterioration of battery performance is reduced. According to some specific embodiments of the present application, the BET specific surface area of the positive electrode active material may be 5.5 m²/g to 10 m²/g.

In the present application, the BET specific surface area of the positive electrode active material can be measured by referring to the following method: A multi-station fully automatic specific surface area and pore analyzer GeminiVII2390 from American Micromeritics is used; approximately 7 g of the positive electrode active material is placed into a 9 cc long tube with a bulb, degassed at 200 °C for 2 h, and then placed into the main unit for testing to obtain BET (specific surface area) data of the positive electrode active material.

A second aspect of the present application provides a method for preparing the positive electrode active material provided in the first aspect of the present application. The method includes the following steps.

In S100, a sodium source, an iron source, a phosphorus source, and a D source are mixed to obtain a precursor material.

According to some embodiments of the present application, a sodium source, an iron source, a phosphorus source, and a D source are mixed and added into water, stirring and milling are performed to obtain a mixed slurry, and then the slurry is dried to obtain a precursor material.

According to some embodiments of the present application, the method further includes adding an A source and/or a B source to the precursor material. According to some specific embodiments of the present application, a sodium source, an A source, an iron source, a phosphorus source, and a D source are mixed and added into water, stirring and milling are performed to obtain a mixed slurry, and then the slurry is dried to obtain a precursor material. According to some specific embodiments of the present application, a sodium source, an iron source, a B source, a phosphorus source, and a D source are mixed and added into water, stirring and milling are performed to obtain a mixed slurry, and then the slurry is dried to obtain a precursor material. According to some specific embodiments of the present application, a sodium source, an A source, an iron source, a B source, a phosphorus source, and a D source are mixed and added into water, stirring and milling are performed to obtain a mixed slurry, and then the slurry is dried to obtain a precursor material.

It should be noted that the sodium source, the A source, the iron source, the B source, the phosphorus source, and the D source are conventional materials in the art, and can be selected by those skilled in the art according to the actual situation. For example, the sodium source includes at least one of sodium pyrophosphate, sodium dihydrogen phosphate, disodium hydrogen phosphate, sodium carbonate, sodium acetate, and sodium oxalate; the A source includes at least one of potassium pyrophosphate, potassium dihydrogen phosphate, dipotassium hydrogen phosphate, potassium phosphate, potassium metaphosphate, potassium citrate, potassium carbonate, potassium bicarbonate, potassium oxalate, potassium acetate, lithium hydroxide, lithium carbonate, lithium formate, lithium acetate, and lithium oxalate; the iron source includes at least one of ferric nitrate, ferric chloride, ferric oxide, ferric phosphate, and ferrous oxalate; the B source includes at least one of a chloride, an oxide, an acetate, and a nitrate of element B; the phosphorus source includes at least one of sodium pyrophosphate, sodium dihydrogen phosphate, amine dihydrogen phosphate, iron phosphate, phosphoric acid, and pyrophosphoric acid; the D source includes at least one of ammonium fluoride, sodium fluoride, ammonium chloride, sodium chloride, ammonium bromide, sodium metasilicate, sodium silicate, tetraethyl silicate, sodium fluorosilicate, boric acid, sodium sulfate, and sodium bisulfate.

According to some embodiments of the present application, if it is necessary to mix carbon within the interior of the positive electrode active material, a sodium source, an A source, an iron source, a B source, a phosphorus source, a D source, and a first carbon source are mixed. It should be noted that the first carbon source includes at least one of sucrose, tannic acid, polyethylene glycol, polyvinylpyrrolidone, glucose, ascorbic acid, conductive carbon black, a carbon nanotube, graphene, and citric acid.

In S200, the precursor material is sintered to obtain the positive electrode active material.

According to some embodiments of the present application, the obtained precursor material described above is placed in a tube furnace for sintering.

According to some embodiments of the present application, multi-step sintering may be employed. For example, two-step sintering may be employed, and the precursor material is first subjected to a first sintering, followed by a second sintering.

According to some embodiments of the present application, the temperature of the first sintering may be 200 °C to 400 °C. For example, it may be 200 °C, 250 °C, 300 °C, 350 °C, or 400 °C, or may be a range formed by any of the above values. The holding time of the first sintering may be 3 h, 3.5 h, 4 h, 4.5 h, 5 h, or the like, or may be a range formed by any of the above values. As a result, the materials are sufficiently reacted, and the phase purity and crystallinity of the positive electrode active material are improved.

According to some embodiments of the present application, the temperature of the second sintering may be 450 °C to 650 °C. For example, it may be 450 °C, 500 °C, 550 °C, 600 °C, or 650 °C, or may be a range formed by any of the above values. The holding time of the second sintering may be 8 h, 8.5 h, 9 h, 9.5 h, 10 h, 10.5 h, 11 h, 11.5 h, 12 h, 12.5 h, 13 h, 13.5 h, 14 h, 14.5 h, 15 h, or the like, or may be a range formed by any of the above values. As a result, the materials are sufficiently reacted, and the phase purity and crystallinity of the positive electrode active material are improved.

According to some embodiments of the present application, if it is necessary to obtain a positive electrode active material having a carbon coating layer, the positive electrode active material obtained in the above step is mixed with a second carbon source and then sintered. Specifically, the positive electrode active material and the second carbon source may be directly mixed and sintered, or the positive electrode active material and the second carbon source may be dissolved in a solvent and mixed to form a slurry, and the slurry may be dried and then sintered. The mixed material including the positive electrode active material and the second carbon source is put into a tube furnace, nitrogen is introduced as a protective gas, and a carbon-containing coating layer is formed on the surface of the positive electrode active material with the removal of non-carbon elements from the second carbon source.

According to some embodiments of the present application, if it is necessary to obtain a composite material where carbon is mixed within the interior and also applied to the surface, a precursor material including a sodium source, an A source, an iron source, a B source, a phosphorus source, a D source, and a first carbon source is first sintered in a nitrogen atmosphere, and then the obtained positive electrode active material is mixed with a second carbon source and then sintered in a nitrogen atmosphere.

It should be noted that the second carbon source includes at least one of sucrose, tannic acid, polyethylene glycol, polyacrylonitrile, cellulose, polyvinylpyrrolidone, glucose, ascorbic acid, conductive carbon black, a carbon nanotube, graphene, and citric acid. Moreover, in the above preparation process, the mixing ratio of the sodium source, the A source, the iron source, the phosphorus source, the D source, the first carbon source, and the second carbon source is based on the composition Na₄₋ₐA_{b}Fe_{3-c}B_{d}(PO₄)₂₋ₑD_{f}(P₂O₇) of the above positive electrode active material compound, which will not be repeated here.

A third aspect of the present application provides a positive electrode plate including the positive electrode active material provided in the first aspect of the present application or a positive electrode active material prepared by the method provided in the second aspect of the present application. As a result, the energy density and rate capability of the battery including the positive electrode plate are improved.

In a sodium-ion battery, the positive electrode plate generally includes a positive electrode current collector and a positive electrode active material layer disposed on the positive electrode current collector, and the positive electrode active material layer includes a positive electrode active material.

The positive electrode current collector may be a conventional metal foil or a composite current collector (a metal material may be disposed on a polymer substrate to form a composite current collector). As an example, the positive electrode current collector may include one or more of a copper foil, an aluminum foil, a nickel foil, a stainless steel foil, a stainless steel mesh, and a carbon-coated aluminum foil.

The positive electrode active substance layer optionally includes, in addition to the above positive electrode active material, a conductive agent for improving the conductivity of the positive electrode active substance layer and a binder for firmly bonding the positive electrode active material and the conductive agent to the positive electrode current collector. The types of the conductive agent and the binder are not particularly limited in the present application, and may be selected according to actual needs.

As an example, the conductive agent may include one or more of superconducting carbon, acetylene black, carbon black, Ketjen black, a carbon dot, a carbon nanotube, graphene, and a carbon nanofiber; the binder may be one or more of styrene-butadiene rubber (SBR), polyacrylic acid (PAA), carboxymethylcellulose (CMC), polyvinylidene fluoride (PVDF), polytetrafluoroethylene (PTFE), ethylene-vinyl acetate copolymer (EVA), and polyvinyl alcohol (PVA).

As an example, the binder may include one or more of styrene-butadiene rubber (SBR), styrene-butadiene copolymers (SBCs), polyvinylidene fluoride (PVDF), polytetrafluoroethylene (PTFE), and carboxymethylcellulose (CMC).

These materials are all commercially available.

A fourth aspect of the present application provides a battery including the positive electrode plate provided in the third aspect of the present application. As a result, the battery has excellent energy density and rate capability.

The battery refers to a battery that can continue to be used by activating an active material by means of charging after discharging.

It can be understood that the battery proposed by the present application may be a sodium-ion battery.

Typically, the battery includes a positive electrode plate, a negative electrode plate, a separator, and an electrolytic solution. During the charging and discharging process of the battery, active ions are intercalated and deintercalated back and forth between the positive electrode plate and the negative electrode plate. The separator is disposed between the positive electrode plate and the negative electrode plate for isolation. The electrolyte conducts ions between the positive electrode plate and the negative electrode plate.

### [Negative Electrode Plate]

In a sodium-ion battery, the negative electrode plate generally includes a negative electrode current collector and a negative electrode active material layer disposed on the negative electrode current collector, and the negative electrode active material layer includes a negative electrode active material.

The negative electrode plate may include only the negative electrode current collector, that is, may not include the negative electrode active material. The negative electrode plate may also include a metal phase pre-deposited on the negative electrode current collector. The negative electrode current collector may be a conventional metal foil, a carbon-coated metal foil, a porous metal plate, or the like. As an example, the negative electrode current collector may be a copper foil or an aluminum foil.

The specific type of the negative electrode active material is not limited and may include active materials known in the art that can be used for the negative electrodes of sodium-ion batteries. Those skilled in the art can select them according to actual needs. As an example, the negative electrode active material may include, but is not limited to, one or more of sodium metal, a carbon material, an alloy material, a transition metal oxide and/or sulfide, a phosphorus-based material, and a titanate material. Specifically, the carbon material may include one or more of hard carbon, soft carbon, amorphous carbon, and nanostructured carbon materials; the alloy material may include an alloy material formed from one or more of Si, Ge, Sn, Pb, and Sb; the transition metal oxide and sulfide has the general formula of MₓN_{y}, where M includes one or more of Fe, Co, Ni, Mn, Sn, Mo, Sb, and V, and N includes O or S; the phosphorus-based material may include one or more of red phosphorus, white phosphorus, and black phosphorus; the titanate material may include one or more of Na₂Ti₃O₇, Na₂Ti₆O₁₃, Na₄Ti₅O₁₂, Li₄Ti₅O₁₂, and NaTi₂(PO₄)₃. These materials are all commercially available.

Typically, the negative electrode active material layer may further optionally include a binder and a conductive agent, where the conductive agent is used for increasing conductivity of the negative electrode active substance layer, and the binder is used for firmly binding the negative electrode active material and the conductive agent to the negative electrode current collector. The types of the conductive agent and the binder are not particularly limited in the present application, and may be selected according to actual needs.

As an example, the conductive agent may include one or more of superconducting carbon, acetylene black, carbon black, Ketjen black, a carbon dot, a carbon nanotube, graphene, and a carbon nanofiber.

As an example, the binder may include one or more of styrene-butadiene rubber (SBR), styrene butadiene copolymers (SBCs), a water-based acrylic resin, and carboxymethylcellulose (CMC).

The negative electrode active substance layer may further optionally include a thickener, such as carboxymethylcellulose (CMC). However, the present application is not limited thereto, and other materials which can be used as the thickener of the negative electrode plate of the sodium-ion battery may also be used in the present application.

### [Separator]

The present application has no particular limitation on the above separator, and any well-known porous-structured separator having electrochemical stability and mechanical stability may be selected according to actual needs. For example, the separator may be a single-layer or multilayer film including one or more of glass fiber, nonwoven fabric, polyethylene, polypropylene, and polyvinylidene fluoride.

### [Electrolytic Solution]

The electrolytic solution conducts ions between the positive electrode plate and the negative electrode plate. The electrolytic solution may include an electrolyte salt and a solvent.

As an example, the electrolyte sodium salt includes at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethylsulfonyl)imide.

As an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), dimethoxyethane (DME), diethylene glycol dimethyl ether, triethylene glycol dimethyl ether, tetraethylene glycol dimethyl ether, polyethylene glycol dimethyl ether, diethyl ether, ethylene glycol diethyl ether, ethylene glycol dibutyl ether, diethylene glycol diethyl ether, diethylene glycol dibutyl ether, tetrahydrofuran, methyl tetrahydrofuran, 1,3-dioxolane, 1,3-dioxane, 1,4-dioxane, tetrahydropyran, ethyl methyl sulfone (EMS), and diethyl sulfone (ESE).

In some embodiments, the electrolytic solution further includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, and an additive for improving the low-temperature performance of the battery.

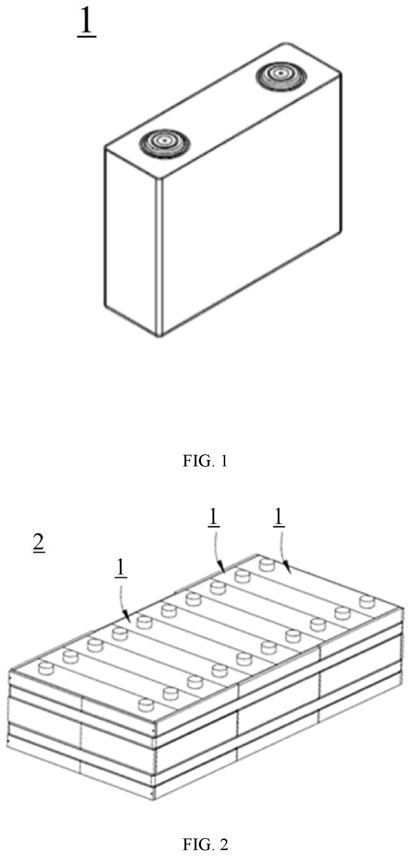

The embodiments of the present application do not particularly limit the shape of the sodium-ion battery, and it may have a cylindrical shape, a prismatic shape, or any other shape. FIG. 1 shows a secondary battery 1 having a prismatic structure as one example.

In some embodiments, the secondary battery may include an outer packaging. The outer packaging is used for packaging the positive electrode plate, the negative electrode plate, and the electrolyte.

In some embodiments, the outer packaging may include a housing and a cover plate. The housing may include a bottom plate and side plates connected to the bottom plate, and the bottom plate and the side plates define, in an enclosing manner, an accommodating cavity. The housing is provided with an opening in communication with the accommodating cavity, and the cover plate is capable of lidding the opening to close the accommodating cavity.

The positive electrode plate, the negative electrode plate, and the separator may be subjected to a winding process or a stacking process to form an electrode assembly. The electrode assembly is packaged in the accommodating cavity. The electrolyte may be an electrolytic solution, which infiltrates into the electrode assembly. The number of electrode assemblies included in the sodium-ion battery may be one or more, and may be adjusted according to needs.

In some embodiments, the outer packaging of the sodium-ion battery may be a hard shell, such as a hard plastic shell, an aluminum shell, or a steel shell.

The outer packaging of the sodium-ion battery may also be a soft pack, such as a pouch-type soft pack. The soft pack may be made of plastic. For example, the plastic may include one or more of polypropylene (PP), polybutylene terephthalate (PBT), and polybutylene succinate (PBS).

In some embodiments, the sodium-ion battery may be assembled into a battery module, and the number of sodium-ion batteries contained in the battery module may be more than one, and the specific number may be adjusted according to the application and capacity of the battery module.

FIG. 2 shows a battery module 2 as one example. Referring to FIG. 2, in the battery module 2, a plurality of secondary batteries 1 may be sequentially arranged in a length direction of the battery module 2. Certainly, the arrangement may also be in any other manner. Further, the plurality of secondary batteries 1 may be fixed by a fastener.

The battery module 2 may further include a shell provided with an accommodating space in which the plurality of secondary batteries 1 are accommodated. In some embodiments, the above battery module may further be assembled into a battery pack; the number of the battery modules included in the battery pack may be adjusted based on the application and capacity of the battery pack.

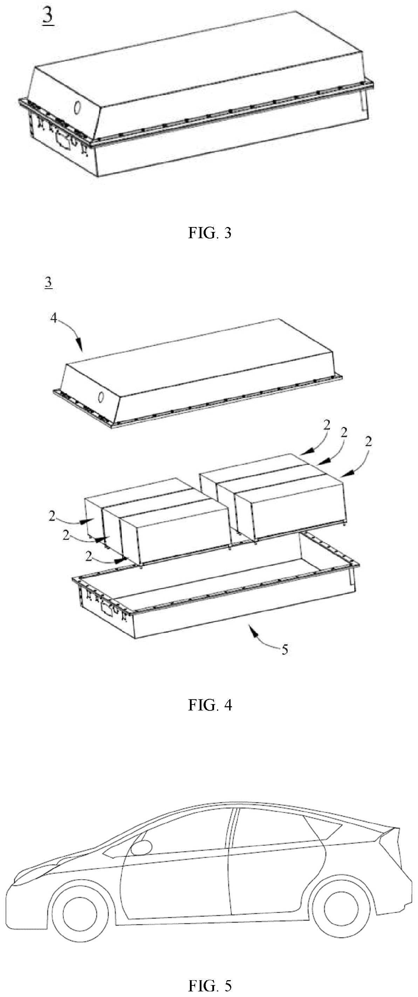

FIGs. 3 and 4 show a battery pack 3 as one example. Referring to FIGs. 3 and 4, the battery pack 3 may include a battery case and a plurality of battery modules 2 disposed in the battery case. The battery case includes an upper case body 4 and a lower case body 5. The upper case body 4 is capable of lidding the lower case body 5 to form a closed space for accommodating the battery modules 2. The plurality of battery modules 2 may be arranged in any manner in the battery case.

A fifth aspect of the present application provides an electric device including the battery provided in the fourth aspect of the present application. As a result, the service life of the electric device is improved.

The electric device includes at least one of the sodium-ion battery, the battery module, and the battery pack. The sodium-ion battery, the battery module, or the battery pack may serve as a power source for the electric device or as an energy storage unit for the electric device. The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, and an energy storage system.

A sodium-ion battery, a battery module, or a battery pack may be selected based on the use requirements of the electric device.

FIG. 5 shows an electric device as one example. The electric device includes a pure electric vehicle, a hybrid electric vehicle, or a plug-in hybrid electric vehicle. To meet the requirements of the electric device for high power and high energy density of the sodium-ion battery, a battery pack or a battery module may be used.

As another example, the electric device may include a mobile phone, a tablet computer, or a notebook computer. The electric device is generally required to be light and thin, and a sodium-ion battery can thus be used as a power source.

To make the technical problems to be addressed, the technical solutions, and the beneficial effects of the embodiments of the present application more apparent, the present application is further described in detail below with reference to the drawings and examples. Apparently, the described examples are merely some examples of the present application, rather than all of the examples. The following description of at least one exemplary example is merely illustrative and is in no way intended to limit the present application and the application thereof. Based on the examples in the present application, all other examples obtained by those of ordinary skills in the art without creative work shall fall within the protection scope of the present application.

### Example 1

### 1. Preparation of positive electrode active material

Sodium pyrophosphate, ferrous oxalate, ammonium dihydrogen phosphate, glucose, and ammonium fluoride were added to deionized water according to the chemical formula Na₄₋ₐA_{b}Fe_{3-c}B_{d}(PO₄)₂₋ₑD_{f}(P₂O₇) in Table 1, and the mixture was ground by a sand mill for 10 h to obtain a mixed slurry. The mixed slurry was dried by a spray drying device to obtain a dry precursor powder. The precursor was placed in a tube furnace, and nitrogen was introduced as a protective gas. A first calcination was carried out, with the temperature raised to 300 °C and held for 4 h, and then a second calcination was carried out, with the temperature raised to 550 °C and held for 12 h. The positive electrode active material was thus obtained.

### 2. Preparation of positive electrode plate

A binder polyvinylidene fluoride was fully dissolved in N-methylpyrrolidone, and a conductive agent carbon black and the above positive electrode active material were added to obtain a uniformly dispersed positive electrode slurry (the mass ratio of binder polyvinylidene fluoride, conductive agent carbon black, and positive electrode active material was 10:10:80). The positive electrode slurry was evenly applied to the upper and lower surfaces of an aluminum foil, and then the coated aluminum foil was transferred to a vacuum drying oven for complete drying. The obtained electrode plate was rolled and then die-cut to obtain the positive electrode plate.

### 3. Preparation of negative electrode plate

A carbon nanotube material and a binder sodium carboxymethylcellulose were added to water according to the mass ratio of 4:1.6, and the mixture was stirred to obtain a uniform negative electrode slurry. The negative electrode slurry was applied to the upper and lower surfaces of a copper foil, and then the coated copper foil was transferred to a vacuum drying oven for complete drying. Subsequently, punching was performed to obtain the negative electrode plate.

### 4. Preparation of electrolytic solution

In a glove box in an argon atmosphere (H₂O < 0.1 ppm, O₂ < 0.1 ppm), a sodium salt sodium hexafluorophosphate (NaPF₆) was dissolved in an organic solvent dimethoxyethane DME, and the mixture was uniformly stirred to obtain an electrolytic solution with a sodium salt concentration of 1mol/L.

### 5. Separator

A polypropylene film was used as the separator.

### 6. Preparation of button battery

The positive electrode plate prepared above was die-cut to make a circular electrode plate, and then a circular small sodium plate was used as a counter electrode, a Celgard 2400 separator was used, and electrolytic solution was injected, thus completing the assembly of a button battery.

### 7. Preparation of sodium-ion battery

The positive electrode plate, the separator, and the negative electrode plate were stacked in sequence to enable the separator to be disposed between the positive electrode plate and the negative electrode plate for isolation, and then the stack was wound to obtain an electrode assembly. The electrode assembly was placed in an outer packaging, the above prepared electrolytic solution was injected into the dried sodium-ion battery, followed by procedures of vacuum packaging, standing, formation, and shaping, and the sodium-ion battery was obtained.

The preparation methods for the batteries in Examples 2-27 and Comparative Examples 1-3 are the same as those in Example 1, and the differences are detailed in Table 1.

**Table 1**

| | Na₄₋ₐA₃Fe_{3-c}Ba(PO₄)₂₋ₑD_{f}(P₂O₇) | | | | | | | | | | | | | |
|---|---|---|---|---|---|---|---|---|---|---|---|---|---|---|
| | a | b | c | d | f | e | f/e | 4-a+b | 3-c+d | A | B | D | Position of carbon | Carbon content/% |
| Comparative Example 1 | 0.07 | 0.05 | 0.1 | 0.05 | 0 | 0.01 | 0 | 3.98 | 2.95 | Li | Cu | - | Interior | 2.2 |
| Comparative Example 2 | 0.07 | 0 | 0.1 | 0 | 0 | 0 | - | 3.93 | 2.9 | - | - | - | Interior | 2.2 |
| Example 1 | 0.07 | 0 | 0.1 | 0.05 | 0.03 | 0.01 | 3 | 3.93 | 2.95 | Li | Cu | F | Interior | 2.2 |
| Example 2 | 0.07 | 0.1 | 0.1 | 0.05 | 0.03 | 0.01 | 3 | 4.03 | 2.95 | Li | Cu | F | Interior | 2.2 |
| Example 3 | 0.07 | 0.15 | 0.1 | 0.05 | 0.03 | 0.01 | 3 | 4.08 | 2.95 | Li | Cu | F | Interior | 2.2 |
| Example 4 | 0.07 | 0.05 | 0 | 0 | 0.03 | 0.01 | 3 | 3.98 | 3 | Li | Cu | F | Interior | 2.2 |
| Example 5 | 0.07 | 0.05 | 0.05 | 0 | 0.03 | 0.01 | 3 | 3.98 | 2.95 | Li | Cu | F | Interior | 2.2 |
| Example 6 | 0.07 | 0.05 | 0.1 | 0.05 | 0.03 | 0.01 | 3 | 3.98 | 2.95 | Li | Cu | F | Interior | 2.2 |
| Example 7 | 0.07 | 0.05 | 0.2 | 0.05 | 0.03 | 0.01 | 3 | 3.98 | 2.85 | Li | Cu | F | Interior | 2.2 |
| Example 8 | 0.07 | 0.05 | 0.3 | 0.05 | 0.03 | 0.01 | 3 | 3.98 | 2.75 | Li | Cu | F | Interior | 2.2 |
| Comparative Example 3 | 0.07 | 0.05 | 0.4 | 0.05 | 0.03 | 0.01 | 3 | 3.98 | 2.65 | Li | Cu | F | Interior | 2.2 |
| Example 9 | 0.07 | 0.05 | 0.3 | 0 | 0.03 | 0.01 | 3 | 3.98 | 2.7 | Li | Cu | F | Interior | 2.2 |
| Example 10 | 0.07 | 0.05 | 0.3 | 0.1 | 0.03 | 0.01 | 3 | 3.98 | 2.8 | Li | Cu | F | Interior | 2.2 |
| Example 11 | 0.07 | 0.05 | 0.3 | 0.3 | 0.03 | 0.01 | 3 | 3.98 | 3 | Li | Cu | F | Interior | 2.2 |
| Example 12 | 0.07 | 0.05 | 0.1 | 0.05 | 0.15 | 0.05 | 3 | 3.98 | 2.95 | Li | Cu | F | Interior | 2.2 |
| Example 13 | 0.07 | 0.05 | 0.1 | 0.05 | 0.3 | 0.1 | 3 | 3.98 | 2.95 | Li | Cu | F | Interior | 2.2 |
| Example 14 | 0.07 | 0.05 | 0.1 | 0.05 | 0.03 | 0.01 | 3 | 3.98 | 2.95 | Li | Cu | F and silicate ions (molar ratio 3:1) | Interior | 2.2 |
| Example 15 | 0.07 | 0.05 | 0.1 | 0.05 | 0.03 | 0.01 | 3 | 3.98 | 2.95 | Li | Cu | F | Surface | 2.2 |
| Example 16 | 0.07 | 0.05 | 0.1 | 0.05 | 0.03 | 0.01 | 3 | 3.98 | 2.95 | Li | Cu | F | Interior and surface | 2.2 |
| Example 17 | 0.07 | 0.05 | 0.1 | 0.05 | 0.03 | 0.01 | 3 | 3.98 | 2.95 | Li | Cu | F | Interior | 0.5 |
| Example 18 | 0.07 | 0.05 | 0.1 | 0.05 | 0.03 | 0.01 | 3 | 3.98 | 2.95 | Li | Cu | F | Interior | 1 |
| Example 19 | 0.07 | 0.05 | 0.1 | 0.05 | 0.03 | 0.01 | 3 | 3.98 | 2.95 | Li | Cu | F | Interior | 3 |
| Example 20 | 0.07 | 0.05 | 0.1 | 0.05 | 0.03 | 0.01 | 3 | 3.98 | 2.95 | Li | Cu | F | Interior | 4 |
| Example 21 | -0.12 | 0.05 | 0.1 | 0.05 | 0.03 | 0.01 | 3 | 4.17 | 2.95 | Li | Cu | F | Interior | 2.2 |
| Example 22 | 0 | 0.05 | 0.1 | 0.05 | 0.03 | 0.01 | 3 | 4.05 | 2.95 | Li | Cu | F | Interior | 2.2 |
| Example 23 | 0.12 | 0.05 | 0.1 | 0.05 | 0.03 | 0.01 | 3 | 3.93 | 2.95 | Li | Cu | F | Interior | 2.2 |
| Example 24 | 0.07 | 0.05 | 0.1 | 0.05 | 0.03 | 0.01 | 3 | 3.98 | 2.95 | Li | Cu | Cl | Interior | 2.2 |
| Example 25 | 0.07 | 0.05 | 0.1 | 0.05 | 0.02 | 0.02 | 1 | 3.98 | 2.95 | Li | Cu | Borate ion | Interior | 2.2 |
| Example 26 | 0.07 | 0.05 | 0.1 | 0.05 | 0.015 | 0.01 | 1.5 | 3.98 | 2.95 | Li | Cu | Sulfate ion | Interior | 2.2 |
| Example 27 | 0.07 | 0.05 | 0.1 | 0.05 | 0.03 | 0.01 | 3 | 3.98 | 2.95 | K | Mg | F | Interior | 2.2 |

### Performance Test

Performance test of the button battery: at 25 °C and normal pressure, the button battery was charged at a constant current rate of 0.1C to a voltage of 3.75 V, and then charged at a constant voltage of 3.75 V until the current dropped to 0.05C, and the charge-specific capacity at this time was recorded as the first desodiation capacity. Subsequently, the battery was discharged at a constant current rate of 0.1C to a voltage of 1.5 V, the discharge-specific capacity at this time was recorded as the first sodiation capacity, and the specific capacity of the positive electrode active material was the first sodiation capacity.

Rate capability test of sodium-ion battery: at 25 °C, the prepared sodium-ion battery was placed in a constant temperature chamber at 25 °C and left to stand for 30 min to reach a constant temperature. After reaching the constant temperature, at 25 °C, the battery was charged at a constant current of 0.33C to 3.7 V and then charged at a constant voltage of 3.7 V to 0.05C. The battery was left to stand for 5 min and then discharged at a constant current of 0.33C to 1.5 V, and the battery was left to stand for 5 min to obtain the discharge capacity C₁ at 0.33C. Subsequently, the battery was charged at a constant current of 0.33C to 3.7 V and then charged at a constant voltage of 3.7 V to 0.05C. The battery was left to stand for 5 min and then discharged at a constant current of 3C to 1.5 V, and then the battery was left to stand for 5 min to obtain the discharge capacity C₂ at 3C. The capacity retention rate at rate 3C was then calculated as R = C₂/C₁ × 100%.

The test results of the batteries in Examples 1-27 and Comparative Examples 1-3 are shown in Table 2.

**Table 2**

| | Battery | |
|---|---|---|
| | Specific capacity/mAh/g | Capacity retention rate at rate 3C/% |
| Comparative Example 1 | 102.3 | 92.3 |
| Comparative Example 2 | 99.2 | 88.9 |
| Example 1 | 109.7 | 94.2 |
| Example 2 | 113.6 | 96.6 |
| Example 3 | 107.7 | 96.5 |
| Example 4 | 105.6 | 93.2 |
| Example 5 | 112.4 | 95.1 |
| Example 6 | 115.3 | 96.7 |
| Example 7 | 113.8 | 95.4 |
| Example 8 | 110.9 | 94.6 |
| Comparative Example 3 | 98.9 | 91.5 |
| Example 9 | 104.7 | 93.3 |
| Example 10 | 114.4 | 96.2 |
| Example 11 | 108.8 | 95.3 |
| Example 12 | 114.2 | 96.4 |
| Example 13 | 109.2 | 95.1 |
| Example 14 | 116.4 | 97.3 |
| Example 15 | 109.8 | 93 |
| Example 16 | 116.1 | 97.1 |
| Example 17 | 110.4 | 94.3 |
| Example 18 | 113.8 | 95.5 |
| Example 19 | 114.2 | 97.2 |
| Example 20 | 111.7 | 97.8 |
| Example 21 | 107.3 | 92.8 |
| Example 22 | 110.8 | 93.5 |
| Example 23 | 112.3 | 95.1 |
| Example 24 | 114.6 | 95.5 |
| Example 25 | 113.2 | 95.7 |
| Example 26 | 110.7 | 94.8 |
| Example 27 | 112.5 | 96.3 |

Conclusion: The specific capacity of the positive electrode active materials in Examples 1-27 was higher than that of Comparative Examples 1-3, and the capacity retention rate of the batteries in Examples 1-27 was higher than that of Comparative Examples 1-3, indicating that the positive electrode active materials proposed in the present application have higher specific capacity and can improve the energy density and rate capability of batteries.

Finally, it should be noted that the above examples are only used to illustrate the technical solutions of the present application, rather than limit the same. Although the present application has been described in detail with reference to the foregoing examples, those of ordinary skill in the art should understand that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of claims and specification of the present application. In particular, the technical features mentioned in the examples can be combined in any manner, provided that there is no structural conflict. The present application is not limited to the specific examples disclosed herein, but encompasses all technical solutions falling within the scope of the claims.

## Claims

1. A positive electrode active material, comprising:
Na₄₋ₐA_{b}Fe_{3-c}B_{d}(PO₄)₂₋ₑD_{f}(P₂O₇)
wherein A comprises at least one of Li or K, B comprises a metal element, D comprises at least one of a halogen anion, a silicate ion, a sulfate ion, or a borate ion, -0.12 ≤ a ≤ 0.12, b ≥ 0, 0 ≤ c ≤ 0.3, d ≥ 0, f > 0, and 0 < e ≤ 0.1.

2. The positive electrode active material according to claim 1, wherein 1 ≤ f/e ≤ 3.

3. The positive electrode active material according to claim 1 or 2, wherein values of f and e satisfy at least one of the following conditions: $0 < f \leq 0.3 ;$ and $0 < e \leq 0.05 .$

4. The positive electrode active material according to any one of claims 1 to 3, wherein 0 < f ≤ 0.15.

5. The positive electrode active material according to any one of claims 1 to 4, wherein 3.88 ≤ 4 - a + b ≤ 4.12.

6. The positive electrode active material according to any one of claims 1 to 5, wherein 2.7 ≤ 3 - c + d ≤ 3.

7. The positive electrode active material according to any one of claims 1 to 6, wherein at least one of the following conditions is satisfied:
B comprises at least one of Al, Mg, Ca, Ni, Co, Mn, Cu, Zn, Cr, V, Ti, Sr, Y, Mo, Nb, or W; and
D comprises at least one of the halogen anion, the silicate ion, or the borate ion.

8. The positive electrode active material according to any one of claims 1 to 7, wherein the halogen anion comprises F⁻ or Cl⁻.

9. The positive electrode active material according to any one of claims 1 to 8, wherein D comprises any two of the halogen anion, the silicate ion, the sulfate ion, or the borate ion, and 1 ≤ f/e ≤ 3.

10. The positive electrode active material according to any one of claims 1 to 9, wherein values of b, c, and d satisfy at least one of the following conditions: $0 \leq b \leq 0.1 ;$ $0.05 \leq c \leq 0.2 ;$ and $0 \leq d \leq 0.3 , and c \geq d .$

11. The positive electrode active material according to any one of claims 1 to 10, wherein the positive electrode active material further comprises carbon.

12. The positive electrode active material according to claim 11, wherein a mass proportion of the carbon is 0.5%-4% based on a total mass of the positive electrode active material.

13. The positive electrode active material according to claim 11 or 12, wherein the mass proportion of the carbon is 1%-3% based on the total mass of the positive electrode active material.

14. The positive electrode active material according to any one of claims 1 to 13, wherein at least one of the following conditions is satisfied:
a volume-based average particle size Dᵥ50 of the positive electrode active material is 0.7 µm to 7 µm; and
a BET specific surface area of the positive electrode active material is 4 m²/g to 12 m²/g.

15. The positive electrode active material according to any one of claims 1 to 14, wherein at least one of the following conditions is satisfied:
the volume-based average particle size Dᵥ50 of the positive electrode active material is 1.2 µm to 4 µm; and
the BET specific surface area of the positive electrode active material is 5.5 m²/g to 10 m²/g.

16. A method for preparing the positive electrode active material according to any one of claims 1 to 15, comprising:
mixing a sodium source, an iron source, a phosphorus source, and a D source to obtain a precursor material; and
sintering the precursor material to obtain the positive electrode active material.

17. The method according to claim 16, wherein the method further comprises adding an A source and/or a B source to the precursor material.

18. The method according to claim 16 or 17, wherein the method further comprises adding a first carbon source to the precursor material.

19. The method according to any one of claims 16 to 18, wherein the method further comprises mixing the positive electrode active material with a second carbon source and sintering to form a carbon coating layer on a surface of the positive electrode active material.

20. The method according to any one of claims 16 to 19, wherein the sintering comprises a first sintering and a second sintering, and the first sintering and the second sintering satisfy at least one of the following conditions:
the first sintering is performed at a temperature of 200 °C to 400 °C with a holding time of 3 h to 5 h; and
the second sintering is performed at a temperature of 450 °C to 650 °C with a holding time of 8 h to 15 h.

21. A positive electrode plate, comprising the positive electrode active material according to any one of claims 1 to 15 or a positive electrode active material prepared by the method according to any one of claims 16 to 20.

22. A battery, comprising the positive electrode plate according to claim 21.

23. An electric device, comprising the battery according to claim 22.
